Europäisches Patentamt

(19) European Patent Office

Office européen des brevets

(11) Publication number: **0 265 689 B1**

# EUROPEAN PATENT SPECIFICATION

(45) Date of publication of patent specification: **05.08.92**   (51) Int. Cl.⁵: **C03B 3/00,** C03B 5/04, C03B 5/18, C03B 5/225

(21) Application number: **87114197.4**

(22) Date of filing: **29.09.87**

(54) Multi-stage process and apparatus for refining glass or the like.

(30) Priority: **02.10.86 US 914228**

(43) Date of publication of application:
**04.05.88 Bulletin  88/18**

(45) Publication of the grant of the patent:
**05.08.92 Bulletin  92/32**

(84) Designated Contracting States:
**AT BE CH DE ES FR GB GR IT LI LU NL SE**

(56) References cited:
**EP-A- 0 071 110**
**EP-A- 0 171 638**
**FR-A- 2 281 902**
**US-A- 1 944 855**

(73) Proprietor: **PPG INDUSTRIES, INC.**
**One PPG Place**
**Pittsburgh Pennsylvania 15272(US)**

(72) Inventor: **Knavish, Leonard Arthur**
**32 Samoa Road**
**Pittsburgh, Pa. 15239(US)**
Inventor: **Haskins, David Richard**
**411 Pulaski Street**
**Cumberland Maryland 21502(US)**

(74) Representative: **Sternagel, Hans-Günther, Dr.**
**et al**
**Patentanwälte Dr. Michael Hann Dr. H.-G.**
**Sternagel Sander Aue 30**
**W-5060 Bergisch Gladbach 2(DE)**

Rank Xerox (UK) Business Services

## Description

### Background of the Invention

The present invention relates to a staged process and apparatus for producing glass or the like, and more specifically, to improvements in the refining stage of such a process or apparatus. Although specifically applicable to production of vitreous glass products such as flat glass, fiber glass, container glass, or sodium silicate glass, the invention is also applicable to similar products that may not be considered "glass" under strict definitions. It should be understood that the term "glass" is used herein in the broader sense to include glass-like products. On the other hand, because of the higher standards for optical quality of flat glass, the improvements in refining achieved by the present invention are particularly significant to the production of flat glass.

In US-A-4,381,934 to Kunkle et al. there is disclosed a process for performing the initial step of the melting process, rendering pulverulent batch materials to a liquefied, partially melted state. This process requires that the melting process be completed by a subsequent process stage for most glass products. Refining of the liquefied material would be a typical task of the subsequent process stage. In the aforesaid patent, it is disclosed that the refining may be carried out by feeding the liquefied material to a conventional tank-type melting furnace. In order to optimize the ecomomies of construction and operation of such a staged melting and refining operation, it is desirable to carry out the refining in as efficient a manner as possible, thereby minimizing the size of the refining apparatus and the energy consumed therein.

In the melting of glass, substantial quantities of gas are produced as a result of decomposition of batch materials. Other gases are physically entrained by the batch combustion heat sources. Most of the gas escapes during the initial phase of melting, but some becomes entrapped in the melt. A primary objective of refining is to provide sufficient time and temperature conditions for substantial portions of these entrapped gases to be eliminated from the melt. Because elevated temperatures expedite the rise and escape of gaseous inclusions, the highest temperatures of the melting process are typically provided in the refining zone. Additionally, thermal conditions are conventionally controlled in the refining zone to maintain recirculating flows of the molten glass in order to provide adequate residence time and to assure that the throughput stream passes through the region at high temperatures, where gases are released into the space above the melt, and that unrefined portions of the melt are directed away from the throughput stream. Additionally, the refining stage may be employed to assure dissolution of any remaining solid particles of the batch. Furthermore, the recirculation established during refining can be useful in homogenizing the melt. It would be desirable to optimize the achievement of at least some, and preferably all, of these objectives of refining when coupled to a discrete liquefying stage as in US-A-4,381,934. Prior to this invention, it was found that feeding liquefied material to a recirculatory refining tank has a tendency to create short-circuit flow patterns, whereby incoming material passes relatively quickly into the outgoing product stream, thus providing inadequate residence time for refining.

In prior art glassmaking furnaces, the melt usually progresses from a relatively large melting chamber into smaller or narrower vessels for refining and conditioning, often passing through a constricted passageway in going from one chamber to the next. The following US-A-s show typical compartmentalized glassmaking furnaces: 1,941,778; 704,040; 2,254,079; 2,808,446; 3,399,047; 3,897,234; 4,099,951; and 4,195,982. Heating molten glass in narrow passageways leading to refining chambers may be seen in US-A-s 2,926,208; 2,990,438; 3,499,743; 4,011,070; 3,261,677; 3,415,636, and 2,691,689. None of these patents recognizes the effects on the efficiency of the refining process that have been found to be attributable to the thermal condition and physical orientation of the stream entering the refiner.

### Summary of the Invention

The object of the present invention is to increase the efficiency of the glass refining process.

This object has been attained by a method for making glass or the like wherein batch material is liquefied to an incompletely melted state in a first vessel from which this incompletely melted material is passed to a separate refining vessel in which a volume of the melting material is held and heated further so as to refine the material while the material circulates in a determined pattern by thermal convection, refined material is withdrawn from an outlet end of the refiner vessel and the convection pattern includes a spring zone of rising currents spaced from the outlet end and an opposite batch end of the refiner and a rearward surface flow from the spring zone toward the back end, characterized by introducing the material into the refiner at a location between the spring zone and the back end and controlling the elevation at which the material enters the circulation cell in the refiner by heating the material in at least one channel after it is liquefied and before it is introduced into the refiner so as to enter directly into the rearward flowing stream in the central portion of the back end circulation cell.

In the present invention, glass batch material or the like is liquefied and refined in discrete, physically separated stages, but instead of passing the liquefied material directly to the refining stage, it passes through an intermediate stage where its temperature is increased. By raising its temperature prior to introduction into the refiner, the liquefied material is thermally prepared for entry into the appropriate flow stream within the refiner so as to reinforce the desirable recirculating patterns. Preferably, the liquefied material is heated in the intermediate stage to a temperature higher than it entered from the liquefying stage, but lower than the peak temperature attained by the molten material in the refiner. At a location between the back end and the outlet end of the refiner, a region of peak surface temperatures in the melt inherently induces an upward current known as the "spring zone" or "hot spot." As a consequence, flows at the surface both fore and aft of the spring zone are predominantly away from the spring zone, and flows along the bottom of the refiner tend to be predominantly toward the spring zone. Thus, two counter-rotating circulation cells are set up in the body of molten material held in the refiner. The object of the intermediate thermal conditioning in the present invention is to provide the material being fed to the refiner with thermal buoyancy that will avoid its entering directly into either the lowermost or uppermost flow streams in the refiner, but rather into a central stratum in the circulation cell upstream from the spring zone. Entry at such a stratum is more likely to ensure that the newly introduced material will make several circulations within the cell before being carried into the upper flow stream of the downstream cell, which is the predominant product output stream from the refiner.

A preferred embodiment for effecting the intermediate thermal conditioning of liquefied material being fed to the refiner is an elongated, narrow channel. Typically, the channel has length and width considerably less than that of the refiner. Advantageously, a plurality of liquefying stages may feed a single refiner, in which case each is preferably provided with a channel connecting it with the refiner. Since the primary function of the channel is to permit the liquefied material to be heated to a higher temperature, substantial volume in the channel is not necessary. However, sufficient length to separate the input location from the output location is useful in providing residence time in the channel to perform the heating function. The channel lends itself to heating by means of electric resistance heating between submerged electrodes, but overhead combustion firing or other means of heating may be employed in addition to or instead of the electric heating.

The material flows from the channel or a plurality of channels to the refining vessel in a horizontal direction transverse to the rearwardly flowing stream. The opening between the channel and the refiner is preferably at an elevatic above the level of the refiner bottom to assist entry into the appropriate elevation of the refiner.

The object of the present invention is also attained by an apparatus for making glass or the like, comprising at least one liquefying vessel having means for feeding pulverulent batch material into the vessel, means for heating the interior of the vessel(s) to a liquefying temperature of the batch material, and a batch support surface sloping to a drain opening; a refining vessel to receive the molten material from the liquefaction vessel(s) having a back wall, an outlet opening in an end wall longitudinally spaced from the back wall, longitudinally extending side walls and means for heating the refining vessel, including means for heating the molten material to its peak temperature to establish a spring zone of rising currents within the refining vessel and descending currents near the back wall characterized by at least one horizontally elongated channel below the drain opening of the liquefying vessel(s), having a substantially less area than the refining vessel and providing a passageway for the molten material received from the liquefying vessels(s) to the refining vessel, means for heating the liquefied material in the channel(s) the refining vessel communicating with the channel(s) so as to direct the discharge from the channel(s) into an elevation in the refining vessel between the back wall and the spring zone of rising currents; and the location of the outlet opening of the refining vessel being spaced from the channel(s).

Using the concepts of the present invention to feed liquefied material from a liquefaction stage to a refiner permits attainment of a sufficient level of refiner efficiency so that the size of the refiner can be minimized. Typically, a conditioner or forehearth will receive the molten glass downstream from the refiner for providing the proper temperature for forming the glass into the desired product.

A preferred feature of the present invention is that the channel or channels join the refiner at side portions thereof at a location between the upstream end wall of the refiner and the spring zone. Such an arrangement reduces the chances of newly introduced material being drawn directly into the lowermost flow stream in the refiner. Providing a pair of channels opposite each other is advantageous, but it has been found that an asymmetrical arrangement with a single side channel can be operated satisfactorily.

The Drawings

Figure 1 is a top view in cross-section of a preferred embodiment of the present invention showing a pair of channels feeding a refiner.

Figure 2 is a cross-sectional side view of the embodiment of Figure 1, taken along line 2-2 in Figure 1.

Figure 3 is a transverse cross-sectional view of the same preferred embodiment, taken along line 3-3 in Figure 1, showing a preferred type of liquefier associated with one of the channels.

Figure 4 is an enlarged, schematic view of the left hand portion of the refiner of Figure 2, showing circulation patterns of the molten material.

Detailed Description

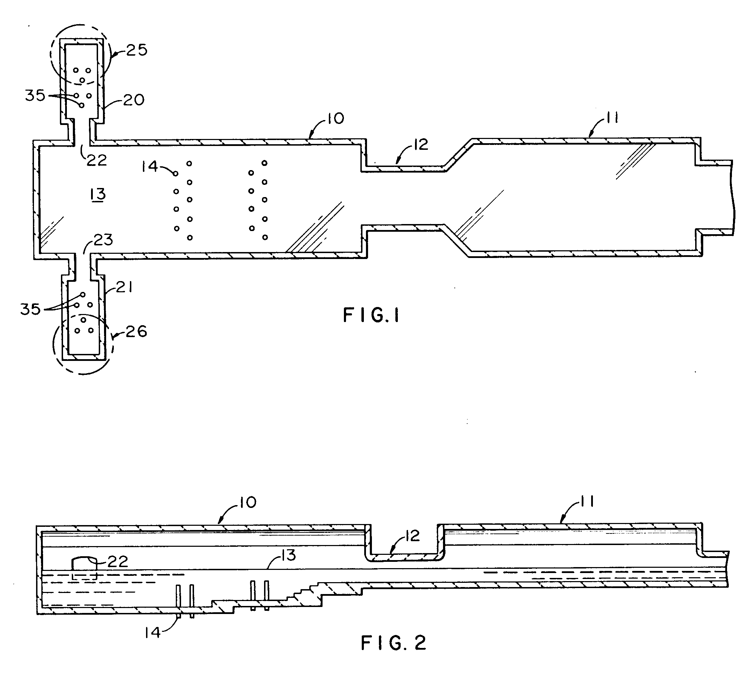

Referring to Figures 1 and 2, there is shown a refiner 10 and a conditioner 11 joined by a narrowed waist section 12, all of which are fabricated of conventional refractory ceramic materials normally used for glass melting furnace applications. The refiner 10, conditioner 11, and waist 12 are configured much like a conventional glass melting furnace but with substantially smaller dimensions and without provision for major fuel combustion. The refiner is preferably provided with some heating means to bring the molten material 13 to its peak temperature and to help establish the desired circulation patterns within the refiner. To this end, the embodiment depicted is provided with electrodes 14 for passing electric current through the melt so as to resistively heat the melt. A variety of electrode patterns could be employed, the preferred arrangement as illustrated having two groups of double, transverse rows.

As shown in Figure 1, a pair of channels 20 and 21 lead into the refiner 10 through openings 22 and 23, respectively, in side walls of the refiner whereby the channels extend transversely to the longitudinal dimension of the refining vessel.

In the arrangement shown, a pair of channels is included, but it should be understood that a larger or smaller number of channels could be provided and that all of the channels need not be in use at any given time. Thus, the system is capable of major incremental changes in throughput. Each channel receives at least partially molten material from a respective liquefying vessel 25, 26. The liquefying stage could assume various configurations as are known in the art, but a particularly advantageous embodiment is that shown in the aforementioned US-A-4,381,934, wherein a layer of batch material acts as insulation within a rotating vessel and additional batch fed onto the insulating layer is quickly liquefied by intense heat and immediately flows through a bottom opening.

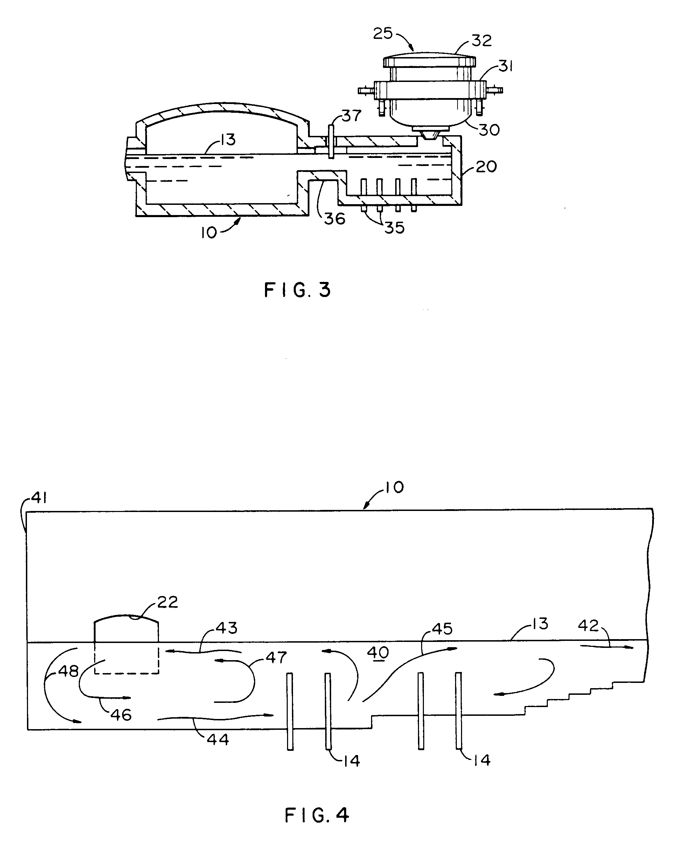

A schematic representation of the preferred liquefying vessel is shown in Figure 3. The vessel 25 includes a steel drum 30 supported on a circular ring 31, which in turn is mounted for rotation about a vertical axis. A stationary lid 32 may be fitted with a plurality of burners, preferably fired with oxygen, or other heat sources (not shown), and the lid may have an opening (not shown) through which batch materials may be fed into the vessel 25. Additional details of the liquefying process may be found in US-A-4,381,934.

When glass batch material is liquefied by the preferred embodiment, the liquefied material entering the channel 20 is only partially melted, consisting of a substantial liquid phase including chiefly the soda source material such as soda ash, and a minor solid phase principally including sand grains. The partially melted material at this stage also includes a substantial gas phase consisting mostly of carbon dioxide from decomposition of carbonate mineral batch ingredients. Also, as it exits the liquefying vessel, a typical soda-lime-silica glass melt is about 270 to 450 degrees Celsius (500 to 800 degrees Fahrenheit) below the desired peak temperature for refining.

Depending upon the type and quality of glass being produced, the liquefied material received in the channel has had imparted to it at least 75 percent, up to about 85 percent of the total energy requirement for melting and refining. Accordingly, only relatively minor additional amounts of energy need be imparted to the melt, and it has been found advantageous to supply a substantial portion of that energy in the channels before the melt enters the convection refiner. Some of the refining functions, e.g., completing dissolution of sand grains and expelling gases from the melt, may take place in the channels, but the primary function performed in the channels is to increase the temperature of the melt. The temperature is raised in general to about midway between the temperature at which the material enters the channels and the peak refining temperature. By way of example, a glass refined at 1540°C (2800°F) is advantageously heated in the channels to about 1370°C (2500°F). The determining factor in selecting the channel exit temperature is the resulting interaction of the material from the channels on the circulation pattern within the refiner 10, as will be discussed hereinbelow. Heating within the channels may be provided by electrodes 35 as in the embodiment shown in the drawings. Combustion heating means may be used in addition to or in place of the electric heating means. Residence time of the melt in the channels need by only sufficient to accomplish the heating function. Thus, each channel is cosiderably smaller in volume than the refiner, and the channels are preferably narrow in configuration to provide proximity of the melt to the heat sources and to minimize heat loses. A raised still portion 36 may be provided at the entrance of each channel onto the refiner in order to help assure that only adequately heated material passes from the channel and to direct the discharge from the channel into a predetermined elevation in the refiner. A skimming member 37 may also be provided near the exist from the channel to prevent excessive foam or other floating material from passing into the refiner.

A typical circulation pattern is shown in the schematic depiction of a refiner in Fig. 4. A zone 40 of rising currents (the "spring zone" or "hot spot") is established by thermal conditions at a location spaced from the back wall 41 of the refiner. In the preferred embodiment shown, the thermal conditions are provided by the heating produced primarily by the electrodes 14. Additionally, or alternatively, combustion means above the melt 13 could provide heat to the refiner. The influx of relatively cool material near the back wall 41 and the additional wall surface area produce a cooling effect on the melt which in turn causes descending currents 48 near the back wall. These descending currents, together with the ascending currents at the spring zone 40 establish a circulation cell between the back wall and the spring zone which is counterclockwise as viewed in Fig. 4. This pattern is desirable because it increases the residence time of newly introduced material in the refiner and reduces the probability of newly introduced material flowing directly to the output flow path 42 from the refiner. Thus, each portion of the melt has a greater probability of being fully refined before being carried into the product stream. Additionally, the rearwardly flowing stream 43 at the surface aids in preventing foam and other buoyant inhomogeneities from drifting into the product stream 42. Similarly, an oppositely circulating pattern is present downstream from the spring zone, including a return flow along the bottom of relatively cool material from the conditioner 11.

If liquefied material were to be fed directly from the liquefier 25 or 26 into the refiner, the relatively low temperature of the material would cause the newly fed material to sink to the bottom of the refiner where a substantial portion would be likely to join flow stream 44 at the bottom. This would be undesirable because there is a substantial tendency for material from the bottom stream 44 to follow a flow path similar to stream 45 through the downstream side of the spring zone and into the output stream 42. The result would be a short-circuit path through the refiner and undesirably short residence time for unduly large portions of the material, which would yield inadequate refining and degradation of product quality. By heating the material after being liquefied and before entering the refiner, the elevation at which the material enters the circulation cell can be controlled by means of thermal buoyancy. As shown in Fig. 4, the preferred path for material flowing from channel 22 is in the central portion of the back end circulation cell, with the new material following a path similar to stream 46, most preferably having an initial rearward flow, and then flowing above the bottom stream 44 toward the spring zone, where, due to its higher elevation, a substantial portion of the stream takes a reversing path 47 short of the spring zone itself. Thus, a predominant portion of the material in the preferred path is returned to the back end recirculation cell after its first pass, and very little enters the forwardly flowing portion 45 of the spring zone currents. The result is greater average residence time in the refiner and a resulting better degree of refining for a given volume of refining vessel, so that the size of the refining vessel can be significantly reduced from that ordinarily required.

Excessively heating the material in channel 21 or 22, however, can lead to a disadvantageous flow pattern whereby the material enters at the surface of the melt 13 in the refiner and proceeds directly in the downstream direction, thus counteracting the rearward flow 43 and suppressing the upstream circulation cell. As a result, the thermal barrier against short circuit entry of unrefined material to the output stream 42 provided by the spring zone 40 would be dissipated. For these reasons, it is preferred that the material flowing from the channels is at a temperature approximately midway between the temperature at which it enters the channels and the peak refining temperature. Expressed differently, a preferred channel exit temperature when processing soda-lime-silica glass may be about 110°C to 220°C (200°F to 400°F) below the peak refining temperature.

Because it is desirable to provide some significant travel toward the back wall of material newly introduced into the refiner from the channel, it is a preferred feature of the present invention that the opening or openings 22, 23 leading into the refiner be spaced from the back wall 41. By way of example, it has been found preferable to space the opening from the back wall about one third to one half of the distance between the back wall 41 and the spring zone 40.

In the conditioner 11 the molten material is permitted to cool to a temperature suitable for forming into the desired product such as glass sheets. For soda-lime-silica flat glass the forming temperature is typically in the range of 1040°C to 1150°C (1900°F to 2100°F).

The size of a melting furnace is affected by its intended throughput capacity. The resident volume of molten material in a conventional flat glass melting and refining furnace (including the conditioner section) is typically on the order of two to three times the daily (24 hours) throughput volume of glass. It is an indication of its effficiency that with the arrangement of the present invention the resident volume of molten glass in the refiner 10 and conditioner 11 may be less than two times the daily throughput, preferably less than 1.5 times, and a particular embodiment has been designed with the resident volume approximately equal to the intended maximum daily throughput.

Other variations and modifications as would be obvious to those of skill in the art may be resorted to within the scope of the claims.

## Claims

1. A method for making glass or the like wherein batch material is liquefied to an incompletely melted state in a first vessel (25, 26) from which this incompletely melted material is passed to a separate refining vessel (10) in which a volume of the melting material is held and heated further so as to refine the material while the material circulates in a determined pattern by thermal convection, refined material is withdrawn from an outlet end of the refiner vessel (10) and the convection pattern includes a spring zone (40) of rising currents spaced from the outlet end and an opposite batch end (41) of the refiner (10) and a rearward surface flow (43) from the spring zone (40) toward the back end (41),
   **characterized by**
   introducing the material into the refiner (10) at a location between the spring zone (40) and the back end (41) and controlling the elevation at which the material enters the circulation cell in the refiner (10) by heating the material in at least one channel (20, 21) after it is liquefied and before it is introduced into the refiner (10) so as to enter directly into the rearward flowing stream (43) in the central portion of the back end circulation cell.

2. The method of claim 1,
   wherein the liquefied material is received in at least one horizontally extending channel (20, 21) of relatively narrow width where its temperature is increased.

3. The method of claim 1,
   wherein the material flows from the channel or a plurality of channels (20, 21) to the refining vessel (10) in a direction transverse to the rearwardly flowing stream (43).

4. The method of claim 1,
   wherein a temperature higher than the temperature imparted to the material in the channel(s) (20, 21) is provided to the molten material inside the refining vessel (10) by heating means.

5. The method of claim 1,
   wherein a substantially greater volume of material is retained in the refining vessel (10) than in the channel(s) (20, 21).

6. The method of claim 1,
   wherein the material is liquefied at two or more vessels (25, 26) and passed to the refiner (10) by way of two or more respective channels (20, 21).

7. The method of claim 6,
   wherein channels (20, 21) introduce the material into the refiner (10) from opposite sides of the refiner (10).

8. The method of claim 1,
   wherein the flow from the channel(s) (20, 21) to the refining vessel (10) is substantially horizontal.

9. The method of claim 1,
   wherein soda-lime-silica glass is being produced and the temperature of the material is raised to 93°-204°C (200°-400°F) below the peak temperature attained by the glass within the refining vessel (10).

10. Apparatus for making glass or the like, comprising at least one liquefying vessel (25, 26) having means for feeding pulverulent batch material into the vessel, means for heating the interior of the vessel(s) (25, 26) to a liquefying temperature of the batch material, and a batch support surface sloping to a drain opening;
    a refining vessel (10) to receive the molten material from the liquefaction vessel(s) (25, 26) having a back wall (41), an outlet opening in an end wall longitudinally spaced from the back wall (41), longitudinally extending side walls and means (14) for heating the refining vessel (10), including means for heating the molten material to its peak temperature to establish a spring zone (40) of rising currents within the refining vessel (10) and descending currents (48) near the back wall (41)
    **characterized by**
    at least one horizontally elongated channel (20, 21) below the drain opening of the liquefying vessel(s) (25, 26), having a substantially less area than the refining vessel (10) and providing a passageway for the molten material received from the liquefying vessel(s) (25, 26) to the refining vessel (10), means for heating the liquefied material in the channel(s) the refining vessel (10) communicating with the channel(s) (20, 21) so as to direct the discharge from the channel(s) (20, 21) into an elevation in the refining vessel (10) between the back wall (41) and the spring zone (40) of rising currents; and the location of the outlet opening of the refining vessel (10) being spaced from the channel(s) (20, 21).

11. The apparatus of claim 10, wherein at least one channel (20, 21) communicates with the interior of the refining vessel (10) through an opening in a side wall portion.

12. The apparatus of claim 11, wherein at least one channel (20, 21) extends transversely to the longitudinal dimension of the refining vessel (10).

13. The apparatus of claim 10, wherein at least two liquefying vessels (25, 26) and at least two channels (20, 21) are associated with the refining vessel (10).

14. The apparatus of claim 11, wherein the opening from the channel(s) (20, 21) to the refiner (10) is above the bottom of the refiner (10) at that region.

15. The apparatus of claim 10, wherein the channel(s) (20, 21) is(are) provided with electrical heating means.

## Revendications

1. Procédé de fabrication de verre et analogues, conformément auquel on liquéfie le mélange vitrifiable jusqu'à un état incomplètement fondu dans un premier récipient (25,26) à partir duquel on envoie cette matière incomplètement fondue dans un récipient d'affinage séparé (10) dans lequel on retient un volume de la matière en cours de fusion et on la chauffe davantage de façon à affiner la matière cependant que celle-ci circule selon un trajet déterminé par convexion thermique, on prélève la matière affinée par l'extrémité de sortie du récipient d'affinage (10) et le trajet à convexion comprend un point chaud (40) de courants ascendants, écartés de l'extrémité de sortie et une extrémité arrière opposée (41) de l'affineur (10) et un écoulement en surface vers l'arrière (43) à partir du point chaud (40) vers l'extrémité arrière (41), caractérisé en ce que on introduit la matière vitrifiable dans l'affineur (10) en un endroit situé entre le point chaud (40) et l'extrémité arrière (41) et on règle le niveau auquel la matière pénètre dans la cellule de circulation dans l'affineur (10) en chauffant la matière dans au moins un canal (21,21) après qu'elle est liquéfiée et avant qu'elle soit introduite dans l'affineur (10), de façon à pénétrer directement dans le courant s'écoulant vers l'arrière (43) dans la partie centrale de la cellule de circulation de l'extrémité arrière.

2. Procédé suivant la revendication 1, caractérisé en ce que la matière liquéfiée est reçue dans au moins un canal s'étendant horizontalement (20, 21) d'une largeur relativement étroite, où on élève sa température.

3. Procédé suivant la revendication 1, caractérisé en ce que la matière s'écoule du canal ou d'une multiplicité de canaux (20, 21) vers le récipient d'affinage (10) dans une direction transversale par rapport au courant s'écoulant vers l'arrière (43).

4. Procédé suivant la revendication 1, caractérisé en ce que l'on confère une température supérieure à la température impartie à la matière présente dans le ou les canaux (20, 21) à la matière fondue qui se trouve à l'intérieur du récipient d'affinage (10) à l'aide d'un dispositif de chauffage.

5. Procédé suivant la revendication 1, caractérisé en ce que l'on retient un volume de matière sensiblement supérieur dans le récipient d'affinage (10) que dans le ou les canaux (20, 21).

6. Procédé suivant la revendication 1, caractérisé en ce qu'on liquéfie la matière dans deux ou plus de deux récipients (25, 26) et on la fait passer dans l'affineur (10) par l'intermédiaire de deux ou plus de deux canaux respectifs (20, 21).

7. Procédé suivant la revendication 6, caractérisé en ce que les canaux (20, 21) introduisent la matière dans l'affineur (10) par des côtés opposés de l'affineur (10).

8. Procédé suivant la revendication 1, caractérisé en ce que l'écoulement du ou des canaux (20, 21) vers le récipient d'affinage (10) est sensiblement horizontal.

9. Procédé suivant la revendication 1, caractérisé en ce que l'on produit du verre sodosilicocalcique et on porte la température de la matière à 93-204° C (200-400° F) en-dessous de la température de pointe atteinte par le verre dans le récipient d'affinage (10).

10. Appareil de fabrication de verre et analogues, caractérisé en ce qu'il comprend au moins un récipient de liquéfaction (25, 26) comportant un dispositif pour introduire la matière vitrifiable pulvérulente dans le récipient, un dispositif pour chauffer l'intérieur du ou des récipients (25, 26) jusqu'à la température de liquéfaction de la matière ou du mélange vitrifiable et une surface de support de mélange vitrifiable en pente vers une ouverture de coulée;
un récipient d'affinage ou affineur (10) destiné à recevoir la matière fondue provenant du ou des récipients de liquéfaction (25, 26), comportant une paroi arrière (41), une ouverture de sortie dans une paroi d'extrémité longitudinalement écartée ou espacée de la paroi arrière (41), des parois latérales s'étendant longitudinalement et un dispositif (14) pour chauffer le récipient d'affinage (10), y compris un dispositif pour chauffer la matière fondue jusqu'à sa température de pointe pour établir un point chaud (40) de courants asecendants dans le récipient d'affinage (10) et des courants descendants (48) à proximité de la paroi arrière (41),
caractérisé
en ce qu'il comporte au moins un canal horizontalement allongé (20, 21) en-dessous de l'ouverture de coulée du ou des récipients de liquéfaction (25, 26), possédant une surface sensiblement inférieure à celle du récipient d'affinage (10) et procurant une voie de passage à la matière fondue reçu du ou des récipients de liquéfaction (25, 26) vers le récipient d'affinage (10), un dispositif (35) pour chauffer la matière liquéfiée dans le ou les canaux, le récipient d'affinage (10) communiquant avec le ou les canaux (20, 21), de manière à diriger la décharge du ou des canaux (20, 21) vers un niveau dans le récipient d'affinage (10) situé entre la paroi arrière (41) et le point chaud (40) de courants ascendants; et l'endroit de l'ouverture de sortie du récipient d'affinage (10) est espacé ou écarté du ou des canaux (20, 21).

11. Appareil suivant la revendication 10, caractérisé en ce qu'au moins un canal (20, 21) communique avec l'intérieur du récipient d'affinage (10) par l'intermédiaire d'une ouverture prévue dans une partie de la paroi latérale.

12. Appareil suivant la revendication 11, caractérisé en ce qu'au moins un canal (20, 21) s'étend transversalement par rapport à la dimension longitudinale du récipient d'affinage (10).

13. Appareil suivant la revendication 10, caractérisé en ce qu'au moins deux récipients de liquéfaction (25, 26) et au moins deux canaux (20, 21) sont associés au récipient d'affinage (10).

14. Appareil suivant la revendication 11, caractérisé en ce que l'ouverture du ou des canaux (20, 21) vers l'affineur (10) se situe au-dessus du fond de l'affineur (10) à cette région.

15. Appareil suivant la revendication 10, caractérisé en ce que le ou les canaux (20, 21) sont pourvus d'un dispositif de chauffe électrique.

**Patentansprüche**

1. Verfahren zum Herstellen von Glas oder dergleichen, wobei Gemengematerial zu einem unvollständig geschmolzenen Zutand in einem ersten Behälter (25, 26) verflüssigt wird, aus dem dieses unvollständig geschmolzene Material in ein getrenntes Läutergefäß (10) überführt wird, in dem ein Volumen des schmelzenden Materials gehalten und weiter erwärmt wird, um das Material zu läutern, während das Material in einem bestimmten Muster durch thermische Konvektion zirkuliert, geläutertes Material vom Auslaßende des Läutergefäßes (10) abgezogen wird und wobei das Konvektionsmuster eine Quellzone (40) von aufsteigenden Strömen in Abstand von dem Auslaßende und einem gegenüberliegenden hinteren Ende (41) des Läutergefäßes (10) und einen nach rückwärts gerichteten Oberflächenstrom (43) aus der Quellzone (40) zum hinteren Ende (41) aufweist,
**gekennzeichnet durch**
Einführen des Materials in das Läutergefäß (10) an einer Stelle zwischen der Quellzone (40) und dem hinteren Ende (41) und Steuern der Höhe, an der das Material in die Kreislaufzelle im Läutergefäß (10) eintritt, durch Erwärmen des Materials in mindestens einem Kanal (20, 21), nachdem es verflüssigt ist und ehe es so in das Läutergefäß (10) eingeführt wird, daß es direkt in den nach rückwärts gerichteten Strom (43) in den zentralen Teil des hinteren Endes der Kreislaufzelle eintritt.

2. Verfahren nach Anspruch 1,
**dadurch gekennzeichnet,**

daß das verflüssigte Material von mindestens einem sich horizontal erstreckenden Kanal (20, 21) mit relativ geringer Breite aufgenomen wird, in dem seine Temperatur erhöht wird.

3. Verfahren nach Anspruch 1,
**dadurch gekennzeichnet,**
daß das Material aus dem Kanal oder einer Vielzahl von Kanälen (20, 21) in das Läutergefäß (10) quer zum nach rückwärts gerichteten Strom (43) fließt.

4. Verfahren nach Anspruch 1,
**dadurch gekennzeichnet,**
daß das geschmolzene Material im Inneren des Läutergefäßes (10) durch Heizeinrichtungen auf eine höhere Temperatur gebracht wird als die Temperatur, die dem Material in dem(den) Kanal(Kanälen) (20, 21) verliehen wird.

5. Verfahren nach Anspruch 1,
**dadurch gekennzeichnet,**
daß in dem Läutergefäß (10) ein wesentlich größeres Materialvolumen gehalten wird als in dem(den) Kanal(Kanälen) (20, 21).

6. Verfahren nach Anspruch 1,
**dadurch gekennzeichnet,**
daß das Material in zwei oder mehreren Behältern (25, 26) verflüssigt und in das Läutergefäß (10) durch zwei oder mehrere entsprechende Kanäle (20, 21) überführt wird.

7. Verfahren nach Anspruch 6,
**dadurch gekennzeichnet,**
daß die Kanäle (20, 21) das Material in das Läutergefäß (10) an einander gegenüberliegenden Seiten des Läutergefäßes (10) einführen.

8. Verfahren nach Anspruch 1,
**dadurch gekennzeichnet,**
daß der Ausfluß aus dem(den) Kanal(Kanälen) (20, 21) in das Läutergefäß (10) im wesentlichen horizontal ist.

9. Verfahren nach Anspruch 1,
**dadurch gekennzeichnet,**
daß Soda-Kalk-Silikatglas hergestellt wird und die Temperatur des Materials auf 93°-204°C (200°-400°F) unter die Spitzentemperatur, die das Glas im Läutergefäß (10) erreicht, erhöht wird.

10. Vorrichtung zum Herstellen von Glas oder dergleichen mit mindestens einem Verflüssigungsbehälter (25, 26), der Einrichtungen zum Zuführen pulverförmigen Gemengematerials in den Behälter, Einrichtungen zum Erwärmen des Innenraumes des(der) Behälters(Behälter) (25, 26) auf eine Verflüssigungstemperatur des Gemengematerials und eine zur Abzugsöffnung hin geneigte, das Gemenge tragende Oberfläche aufweist, einem Läutergefäß (10) zur Aufnahme des geschmolzenen Materials aus dem(den) Verflüssigungsbehälter(n) (25, 26) mit einer Rückwand (41), einer Auslaßöffnung in einer Endwand, die in Längsrichtung in Abstand von der Rückwand (41) angeordnet ist, mit sich längs erstreckenden Seitenwänden und Einrichtungen (14) zum Erwärmen der Läutergefäßes (10), die Einrichtungen zum Erwärmen des geschmolzenen Materials auf seine Spitzentemperatur zum Ausbilden einer Quellzone (40) mit aufsteigenden Strömen in dem Läutergefäß (10) und absteigenden Strömen (48) in der Nähe der Rückwand (41) einschließen,
**gekennzeichnet durch**
mindestens einen horizontal verlängerten Kanal (20, 21) unter der Abzugsöffnung des(der) Verflüssigungsbehälter(s) (25, 26), der(die) eine wesentlich kleinere Fläche als das Läutergefäß (10) aufweist(aufweisen) und einen Durchgang für das von dem(den) Verflüssigungsbehälter(n) (25, 26) erhaltene geschmolzene Material zu dem Läutergefäß (10) schafft(schaffen), Einrichtungen (35) zum Erwärmen des verflüssigten Materials in dem(den) Kanal (Kanälen), wobei das Läutergefäß (10) in Verbindung mit dem (den) Kanal (Kanälen) (20, 21) steht, um das aus dem(den) Kanal (Kanälen) (20, 21) Abgezogene in einer Höhe zwischen der Rückwand (41) und der Quellzone (40) aufsteigender Ströme in das Läutergefäß (10) einzubringen, wobei die Auslaßöffnung des Läutergefäßes (10) in Abstand von dem (den) Kanal (Kanälen) (20, 21) angeordnet ist.

11. Vorrichtung nach Anspruch 10,
**dadurch gekennzeichnet,**
daß mindestens ein Kanal (20, 21) durch eine Öffnung in einem Seitenwandteil in Verbindung mit dem Inneren des Läutergefäßes (10) steht.

12. Vorrichtung nach Anspruch 11,
**dadurch gekennzeichnet,**
daß sich mindestens ein Kanal (20, 21) quer zur Längsausdehnung des Läutergefäßes (10) erstreckt.

13. Vorrichtung nach Anspruch 10,
**dadurch gekennzeichnet,**
daß mindestens zwei Verflüssigungsbehälter (25, 26) und mindestens zwei Kanäle (20, 21) mit dem Läutergefäß (10) verbunden sind.

**14.** Vorrichtung nach Anspruch 11,
**dadurch gekennzeichnet,**
daß die Öffnung des(der) Kanals(Kanäle) (20, 21) zum Läutergefäß (10) sich über dem Boden des Läutergefäßes (10) in diesem Bereich befindet.

**15.** Vorrichtung nach Anspruch 10,
**dadurch gekennzeichnet,**
daß der(die) Kanal (Kanäle) (20, 21) mit elektrischen Heizeinrichtungen versehen ist(sind).

FIG.1

FIG.2

F I G. 3

F I G. 4